# EUROPÄISCHE PATENTSCHRIFT

(11) **EP 0 814 651 B1**
(45) Veröffentlichungstag und Bekanntmachung des Hinweises auf die Patenterteilung: **07.10.1998**
(21) Anmeldenummer: 96900585.9
(22) Anmeldetag: 16.01.1996
(51) Int. Cl.: A01G 23/083, A01G 23/095

(54) **VORRICHTUNG MIT EINER MOTORGETRIEBENEN KETTENSÄGE ZUM ENTÄSTEN UND FÄLLEN VON BÄUMEN**
EQUIPMENT INCLUDING A MOTOR-DRIVEN CHAIN SAW FOR CUTTING BRANCHES FROM AND FELLING TREES
APPAREIL A SCIE A CHAINE COMMANDEE PAR UN MOTEUR, POUR L'ELAGAGE ET L'ABATTAGE DES ARBRES

(30) Priorität: 13.04.1995 DE 29506409 U
(43) Veröffentlichungstag der Anmeldung: 07.01.1998
(73) Patentinhaber: Henning, Peter, 25485 Hemdingen (DE); Rothkegel, Volker, 25485 Hemdingen (DE)
(72) Erfinder: Henning, Peter, 25485 Hemdingen (DE); Rothkegel, Volker, 25485 Hemdingen (DE)
(74) Vertreter: Richter, Werdermann & Gerbaulet
(86) Internationale Anmeldenummer: EP9600154
(87) Internationale Veröffentlichungsnummer: WO9632006

(56) Entgegenhaltungen:
- EP-A- 0 494 319
- EP-B- 0 474 687
- AT-B- 397 177
- DE-A- 3 207 965

## Beschreibung

Die Erfindung betrifft eine Vorrichtung mit einer an einer Traghalterung gehaltenen motorgetriebenen Kettensäge zum Entästen und Fällen von Bäumen und mit einer Greifvorrichtung für zu schneidende Baumäste oder -stämme mit sichelförmigen, mittels Hydraulikzylinder betätigbaren, um Achsen verschwenkbaren Greifarmen.

Beim Entästen von Bäumen, insbesondere hohen Bäumen, ergibt sich häufig das Problem, daß Menschen oder Gegenstände vor den abgeschnittenen, herabfallenden Ästen geschützt werden müssen. Die verwendeten motorgetriebenen Kettensägen sind aufgrund ihres Gewichtes nur mit beiden Händen der Bedienungsperson zu betätigen und zu führen, woraus sich die Notwendigkeit ergibt, daß eine weitere Hilfsperson das Astende halten muß, das abgeschnitten wird. Bei größeren Ästen oder Baumstämmen sind zusätzliche Hilfsmittel erforderlich, beispielsweise dergestalt, daß der abzutrennende Ast durch Seile oder andere Hubeinrichtungen vor dem Herabfallen gesichert werden muß.

Durch die AT-B- 39 71 77 ist eine Vorrichtung zum Ernten und Aufarbeiten, beispielsweise zum Entasten von Bäumen, sowie zum Handhaben von aufgearbeiteten Stämmen bekannt.

Diese Vorrichtung umfaßt einen Grundrahmen, an dem Greifwerkzeuge zum Erfassen des Baumes bzw. Stammes, Entastungswerkzeuge und eine Vorschubeinrichtung für das Bewegen des Stammes relativ zu den Entastungswerkzeugen angeordnet sind. Die Vorschubeinrichtung ist an dem Grundrahmen der Vorrichtung um eine Achse verschwenkbar montiert; sie kann mit Hilfe von einem oder zwei Hydraulikzylindern aus einer an dem Stamm anliegenden Wirkstellung in eine von den Greifwerkzeugen entfernte Bereitschaftsstellung verschwenkt werden. An der Vorschubeinrichtung ist eine Kappsäge montiert.

Die Vorschubeinrichtung zum Verschieben des Stammes zu den Greifwerkzeugen, an denen Entastungsmesser angeordnet sind, ist um eine am Grundrahmen angeordnete Achse verschwenkbar angelenkt und mit Hilfe eines Hydrauliksylinders aus einer an dem Stamm, um den herum die Greifwerkzeuge angeordnet sind, anliegenden Wirkstellung, in der die Vorschubeinrichtung im wesentlichen neben den Greifwerkzeugen angeordnet ist, in eine von den Greifwerkzeugen entfernte Bereitschaftsstellung verschwenkbar ist. Die Vorrichtung selbst besteht aus dem Grundrahmen, an dem die Greifwerkzeuge zum Erfassen des zu handhabenden Baumes bzw. Stammes angeordnet sind.

Die Greifwerkzeuge sind zum Erfassen des zu handhabenden Baumes bzw. Stammes an dem Grundrahmen der Vorrichtung angeordnet. Diese Greifwerkzeuge bilden gleichzeitig Entastungswerkezeuge, die mit einem festen Entastungsmesser, das ebenfalls am Grundrahmen befestigt ist, zusammenarbeiten.

Vermittels der Vorschubeinrichtung wird der Baum durch die Entastungswerkzeuge gezogen. Bei dem Vorgang des Fällens, was mittels der Kappsäge erfolgt, ist die Vorschubeinrichtung in Bereitschaftsstellung verschwenkt. Soll entastet werden und soll der Baumstamm durch das Entastungswerkzeug gezogen werden, dann sind die Vorschubtrommeln der Vorschubeinrichtung an den Baum angesetzt; bei Antrieb der Vorschubtrommeln wird der Baum durch das Entastungswerkzeug gezogen, wobei die Greifwerkzeuge nicht an dem Baumstamm angreifen, da ja sonst keine Längsbewegung des Baumes möglich ist. Hinzu kommt, daß mittels der Kappsäge ein Entasten des Baumes nicht vorgesehen ist; das Entasten erfolgt ausschließlich mittels des Entastungsmessers, das an dem Grundrahmen befestigt ist.

Bei dieser Vorrichtung ist von wesentlicher Bedeutung die Vorschubeinrichtung, die zum Entasten der gefällten oder noch stehenden Bäume mit einem maschinenseitig feststehenden Messer versehen ist, und die mittels einer Verschwenkvorrichtung derartig aus dem Bereich der Greifarme verschwenkbar ist, daß eine Nutzung der Greifarme als reines Manipulationswerkzeug für Stämme möglich wird, ohne daß dabei die Vorschubeinheit im Wege steht. Die Kappsäge, durch den Greifbereich des Greifers verschwenkbar, dient ausschließlich zum Zertrennen und Abschneiden. Da die Vorrichtung an einem Auslegerarm schwenk- und pendelbar befestigt ist, wird ein definiertes Festhalten von gegriffenen Ästen oder Baumteilen nach dem Abschneiden in ihrer vorherigen Lage verhindert.

Insgesamt ist diese Vorrichtung in ihrer Grundkonzeption so ausgelegt und ausgebildet, daß an dem Grundrahmen ein verschwenkbarer Rahmen mit einer Vorschubeinrichtung und eine Kappsäge vorgesehen ist, wobei die Vorschubeinrichtung zwei an dem Rahmen gelagerte Vorschubtrommeln aufweist, mittels der der von Greifwerkzeugen gehaltene Baum durch die Entastungswerkzeuge gezogen wird.

Des weiteren ist durch die EP-A- 494 319 ein fahrbarer Entaster bekannt, mit dessen Hilfe größere Äste an Bäumen aber auch ganze Bäume erfaßt und gekappt werden können. Dieser Entaster ist mit einem Fahrgestell versehen, auf dessen Chassis ein Kran aufgebaut ist, an dessen Ausleger sich eine schwenkbare Arbeitseinheit mit einem Klauengreifer und einer parallel dazu bewegbaren Kappvorrichtung befindet, wobei die Verbindungen zwischen der Arbeitseinheit und dem Kran sowie dem Kran und dem Chassis und die Arbeitseinheit und der Kran selbst so gestaltet sind, daß die Drehmomente in der Größenordnung von mehr als einer Metertonne von der Arbeitseinheit auf das Chassis übertragen werden können.

Bei dem dabei eingesetzten Ausleger handelt es sich um einen gelenklosen Teleskoparm, dessen einzelne, genau ineinander passende Segmente einen polygonen Querschnitt besitzen und am freien Ende des am weitesten ausfahrbaren Segments die Arbeitseinheit so befestigt ist, daß er in allen Richtungen Drehmomente und Biegekräfte auf den Ausleger übertragen kann. Es soll somit keine spezielle technische Ausgestaltung für eine Einrichtung zum Entasten von Baumstämmen geschaffen werden, sondern bei einem Entaster Drehmomente von der Arbeitseinheit auf das Chassis und die in allen Richtungen auftretenden Drehmomente und Biegekräfte auf den Ausleger zu übertragen.

Der Aufbau dieses Entasters ist derart, daß an dem freien Ende des Auslegers des Entasters eine Arbeitseinheit vorgesehen ist, die von der durch die Arbeitseinheit hindurchlaufende Längsachse abstrebende Fangstreben umfaßt, zwischen denen sich eine Haltekante erstreckt, die mit Fangstacheln besetzt ist. Mit dieser Haltekante drückt die Arbeitseinheit gegen den zu kappenden Baum. Außerdem ist die Arbeitseinheit mittels Hydraulikzylindern drehbar gelagert, wodurch eine Drehbewegung der Arbeitseiheit gegenüber der am Auslegerende befestigten Halteplatte um plus-minus 105° möglich ist.

Ferner ist ein Klauengreifer für den zu kappenden Baum vorgesehen. Dieser besteht aus drei sichelförmigen Klauen, die um zwei Achsen schwenkbar sind. Diese Klauen arbeiten mit der Halteplatte derart zusammen, daß der zu entastende Baumstamm zwischen den Klauen und der Halteplatte gehalten wird. Dadurch, daß die Klauen nicht auf einer einzigen Achse drehbar gelagert sind, besteht keine Möglichkeit, die Klauen oder Greifarme relativ zu einem zu ergreifenden Gegenstand gemeinsam um ihre Achsen nach links oder rechts zu Verschwenken, um Toleranzen der Positionierung auszugleichen. Hinzukommt, daß bei dem Entaster ungenügende Haltekräfte durch Fangstreben mit Fangstacheln kompensiert werden. Diese Fangstreben mit Fangstacheln haben den negativen Begleiteffekt, daß die gesamte Arbeitseinheit beim Erfassen und Abschneiden eines Astes nicht nahe an dem Baumstamm positioniert werden kann. Außerdem ist ein Ergreifen von Baumstämmen mit einem geringen Durchmesser oder von dünnen Ästen nicht möglich, wie dies bei der erfindungsgemäßen Vorrichtung der Fall ist.

Es ist daher Aufgabe der vorliegenden Erfindung, eine Vorrichtung der eingangs genannten Art derart auszugestalten, daß die abgetrennten Werkstücke beim Schnitt ohne zusätzliche Hilfsmittel vor dem Herabfallen gesichert werden. Die Vorrichtung mit der Kettensäge soll aufgabengemäß bedienungsfreundlich für eine Person betätigbar sein.

Die Aufgabe wird durch die Vorrichtung mit den Merkmalen des Anspruches 1 gelöst. Dabei ist von Vorteil, die relativ zum Schwert der Kettensäge schwenkbare Greifvorrichtung mit nur auf einer Schwenkachse gelagerten Greifarmen für zu schneidende Werkstücke wie Baumäste, -stämme oder dgl.. Mit der Greifvorrichtung wird während der Schneidoperation der vom Baum abzutrennende Ast gehalten, wodurch die bisher erforderliche Hilfsperson oder andere Hubmittel eingespart werden können. Hierdurch ist das Arbeiten mit der erfindungsgemäßen Kettensäge wirtschaftlicher als bisher durchzuführen. Entsprechendes gilt für das Abtrennen anderer Gegenstände, wie z.B. Dachlatten.

Vorteilhafte Weiterbildungen der Erfindung sind in den Unteransprüchen beschrieben.

Die gesamte Gerätschaft, zusammengefaßt in Greifarme, deren Traghalterung und der Kettensägeeinheit, ist dabei mittels einer Drehvorrichtung, die diese Einheit in vertikaler Ebene nur jeweils 180° rechts oder links herum drehen kann, mit der entsprechenden Hubvorrichtung, wie Kran- oder Baggerarm, verbunden. Die Kettensägeeinheit selbst einschließlich deren Antriebsmotor, ist mittels eines Schwenkmotors, an dem die Sägeeinheit direkt befestigt ist, durch den Schnittbereich verschwenkbar. Dieser Vorgang ist auch durch einen weiteren Hydraulikzylinder ausführbar, wenn die Sägeeinheit an einer senkrecht stehenden Achse unter der Greifereinheit befestigt ist.

Die Greifervorrichtung besteht aus mindestens drei Greifarmen, die um eine gemeinsame Achse schwenkbar sind. Die Greifarme, die sichelförmig ausgeformt sind, werden soweit aufeinander zu bewegt, daß sie den durch Abtrennen frei werdenden Werkstückteil während des Schnittes und danach kraftschlüssig umfassen. Besonders vorteilhaft ist, daß die Greifarme jeweils mit ihren Enden drehbar an einer Welle befestigt sind; sie stellen somit einarmige schwenkbare Hebel dar, die aufeinander zu bzw. voneinander weg bewegbar sind.

Die Vorrichtung ist über einen Schwenkmotor mit einer Traghalterung verbunden, mit der die Greifarme verbunden sind. Die Traghalterung, die beispielsweise an anderen Hubmitteln wie Seilen, Ketten oder einem Teleskoparm befestigt ist, ermöglicht mittels des hieran angelenkten Schwenkmotors beliebige Drehwinkeleinstellungen der Greifarme und/oder ein Verschwenken des Kettensäge-Schwertes um eine Drehachse, die etwa parallel zu der Längsachse des zu schneidenden Werkstückes liegt. Nach dem Schließen der Greifarme kann somit über den Schwenkmotor das Sägeblatt zum Schnitt durch den Ast oder ein anderes Werkstück verschwenkt werden. Die Traghalterung dient sowohl als Träger für die Kettensäge als auch als Träger für eine Welle, die senkrecht zur Schneidebene steht, und die mit den Greifarmen verbunden ist. Durch die Verwendung von drei oder mehr Greifarmen wird somit eine Mehrpunktunterstützung des abzuschneidenden Werkstückes geschaffen. Vorzugsweise sind sowohl das Schwert als auch die Sägekette der Kettensäge hydraulisch oder pneumatisch antreibbar, insbesondere über einen gemeinsamen Antrieb, wie er beispielsweise an Hubgerät bzw. Hubfahrzeugen üblich ist.

Die Traghalterung ist zur bestimmungsgemäßen Nutzung der Vorrichtung bevorzugterweise starr mit einem Teleskoparm oder sonstigem Arm eines Hubgerätes verbunden, damit nach dem Absägen eines Baumteiles auftretende Drehmomente aufgefangen werden können. Eine Befestigung der Vorrichtung an einem Kranarm oder einer ähnlich gestalteten Hubeinrichtung mittels Ketten oder Seilen ist auch möglich, doch ist der starren Befestigung der Vorzug zu geben.

Zur besseren Sicherung der Greifarme ist jeder von den Greifarmen mit einem Hydraulikzylinder verbunden und über diesen antreibbar, d.h. schwenkbar. Durch Hydraulikzylinder können entsprechend dem pneumatischen oder hydraulischen Antrieb große Hebelkräfte aufgebracht werden, die einen sicheren Halt des abgetrennten Werkstückteils gewährleisten. Um eine kompakte Vorrichtung zu schaffen, sind auch die Hydraulikzylinder mit der genannten Traghalterung fest verbunden.

Das Schwert ist unabhängig von der Stellung der Traghalterung und der Greifarme um die durch die gemeinsame Welle der Greifarme gegebene Schwenkachse um einen Drehwinkel schwenkbar, der die durch die Greifarmstellung vorgegebene Fläche überstreicht. Hierdurch ergibt sich eine hohe Funktionalität hinsichtlich der Beweglichkeit, insbesondere hinsichtlich der Positionierung der Kettensäge nach allen Raumrichtungen in Verbindung mit einer Drehmöglichkeit des Kettenschwertes um bis zu 360°. Hierdurch ist jeder beliebige Arbeitspunkt in und an einem Baum zu erreichen oder zu bearbeiten.

Die Vorrichtung mit der Kettensäge wird als Vorsatzgerät an einem Teleskoparm angeordnet, beispielsweise an Baggern, Flurförderfahrzeugen, Kränen, Hebebühnen oder ähnlichem befestigt.

Des weiteren ist eine Steuereinrichtung vorgesehen, über die sämtliche Schwenkarbeiten und die Sägekette bedienbar sind. Gesteuert werden sowohl die räumliche Ausrichtung der Traghalterung, gegebenenfalls über ein Kugelgelenk oder ähnliches, ferner die Drehwinkelstellung der Greifarme in Bezug auf die Traghalterung, das Öffnen und Schließen der Greifarme und das Schwenken sowie die Drehzahlsteuerung der Sägekette. Eine derartige Steuereinrichtung ist bedienerfreundlich von einer einzigen Person zu betätigen. Vorzugsweise ist die Steuereinrichtung im oder am Fahrerhaus eines einen Teleskoparm aufweisenden Fahrzeuges angeordnet, so daß der Fahrer vom Fahrerhaus aus sämtliche beschriebenen Bedienungsvorgänge steuern kann.

Die Vorrichtung unterscheidet sich von den in der Holzwirtschaft eingesetzten Geräten insofern, als das abgeschnittene Gut in seiner vorherigen Position festgehalten wird und gezielt und definiert nach dem Schnitt abgelegt werden kann.

Ein Ausführungsbeispiel der Erfindung ist in den Zeichnungen dargestellt. Es zeigen
- Fig. 1: eine Seitenansicht einer Vorrichtung mit einer Kettensäge zum Entästen und Fällen von Bäumen,
- Fig. 2: eine Draufsicht auf diese Vorrichtung,
- Fig. 3: eine Seitenansicht eines Greifarmes,
- Fig. 4: eine Ansicht von oben auf den Greifarm gemäß Fig. 3 mit einer Halterung für den Hubzylinder,
- Fig. 5: eine Vorderansicht der als Baumschneider ausgebildeten Vorrichtung und
- Fig. 6: eine Seitenansicht der Vorrichtung mit Grundrahmen, Konsole und Greifarmen.

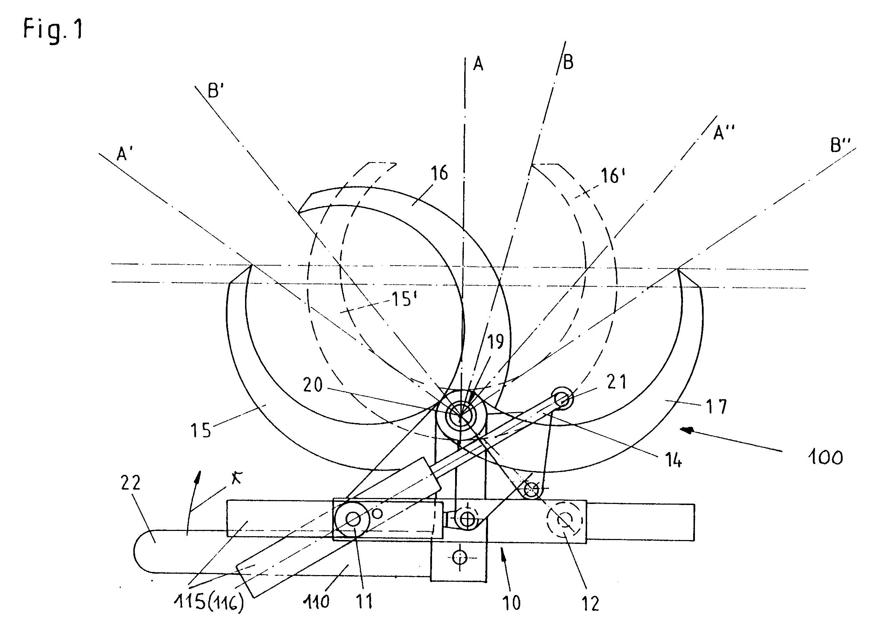

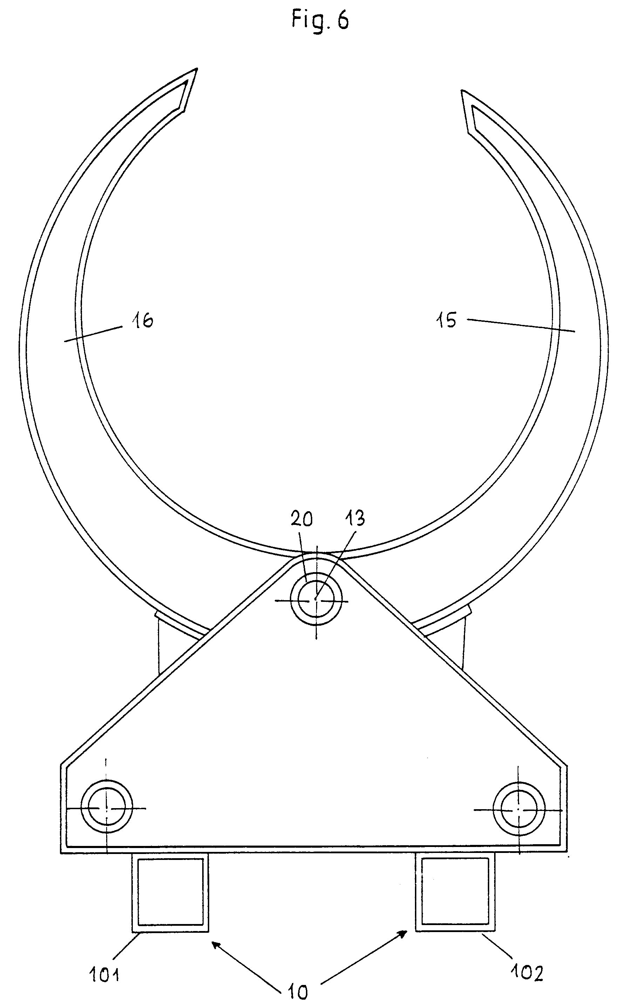

Die erfindungsgemäße Baumentästungs- und Baumfäll-Vorrichtung 100 besteht gemäß Fig. 1, 5 und 6 aus einem Grundrahmen als Traghalterung 10 mit zwei Rahmenteilen 101, 102 aus bevorzugterweise Vierkantprofilen mit einer Anzahl von auf diesen angeordneten dreieckförmigen Konsolen 12, 12a, 12b, 12c, die mit ihren Basisflächen auf den Vierkantprofilen befestigt sind, wobei bei dem Ausführungsbeispiel gemäß Fig. 6 vier Konsolen vorgesehen sind, wobei zwischen den Konsolen 12, 12a, den Konsolen 12a, 12b und den Konsolen 12b, 12c je ein Greifarm 15, 16, 17 drehbar gehalten ist, wobei an jedem Greifarm 15, 16, 17 ein Hydraulikzylinder 115, 116, 117 derart angreift, daß deren ausfahrbarer Kolben 14 endseitig mit dem Greifarm 15 bzw. 16 bzw. 17 verbunden ist, um die Greifarme um ihre Achsen 13 verschwenken zu können (Fig. 6). Hierzu sind die Greifarme 15, 16, 17 mit ihren Enden drehbar an einer Welle 20 gelagert (Fig. 1 und 6). Die Schwenkachse 13 aller Greifarme 15, 16, 17 fluchten und bilden die Mittelachse der Gesamtvorrichtung.

Jeder Hydraulikzylinder 115, 116, 117 ist zwischen je zwei Konsolen 12, 12a und 12a, 12b und 12b, 12c vermittels Lager- bzw. Schwenkzapfen 115a, 115b und 116a, 116b und 117a, 117b in sich gegenüberliegenden Buchsen 115', 115'' und 116', 116'' und 117', 117'' gelagert, die an den Konsolen 12, 12a, 12b, 12c vorgesehen sind. Die Lager- bzw. Schwenkzapfen 115a, 115b, 116a, 116b, 117a, 117b sind an den Hydraulikzylinder 115, 116, 117 bevorzugterweise fest angegossen.

Die Traghalterung 10 umfaßt Rahmenteile 101, 102, die bevorzugterweise im Kreuzverbund miteinander verbunden sind, um die Gesamtvorrichtung 100 um ihre Mittellängsachse verdrehen zu können.

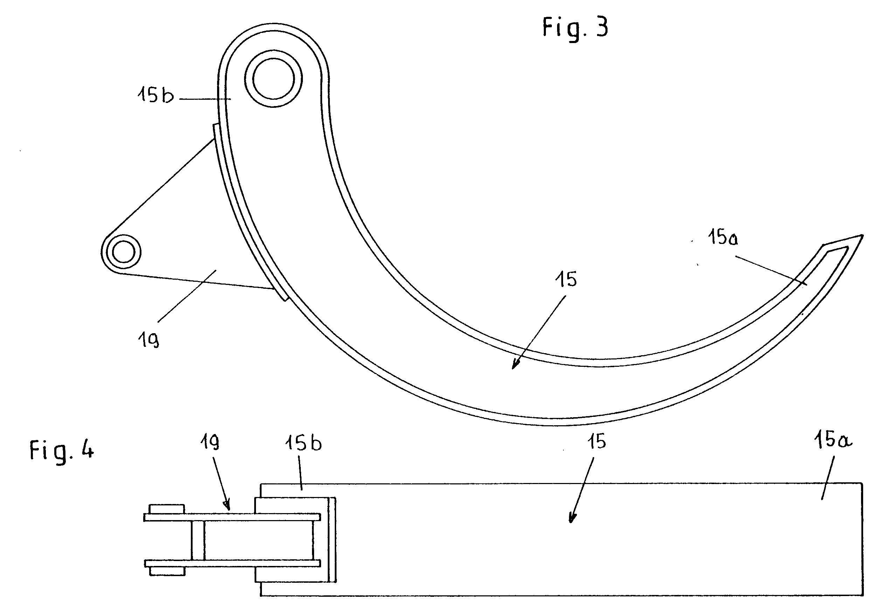

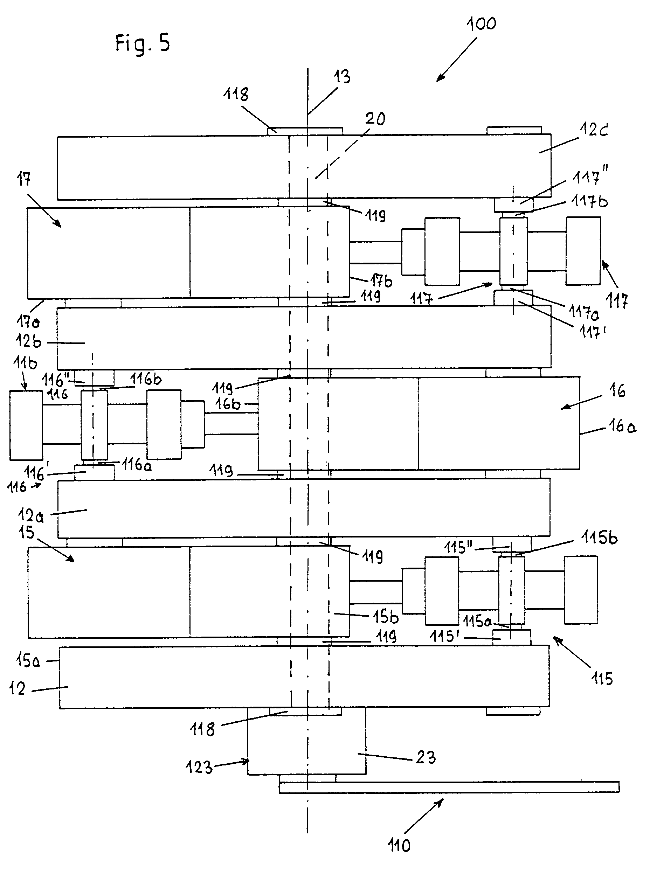

Jeder Greifarm 15, 16, 17 weist an seinem dem freien Ende 15a, 16a, 17a abgekehrten Ende 15b, 16b, 17b eine Halterung 19 für den Hydraulikzylinder 115, 116, 117 auf (Fig. 1, 3 und 4). Im Drehbereich eines jeden Greifarmes 15, 16, 17 sind zu beiden Seiten eines jeden Greifarmes zwischen diesen und den Konsolen 12, 12a, 12b, 12c Lagerscheiben 119 angeordnet, durch die die Welle 20 hindurchgeführt ist. In den beiden äußeren Konsolen 12, 12c ist die Welle 20 gegen ein Herausrutschen aus den Konsolen bei 118 mittels Kappen oder deckelförmiger Elemente gesichert (Fig. 5).

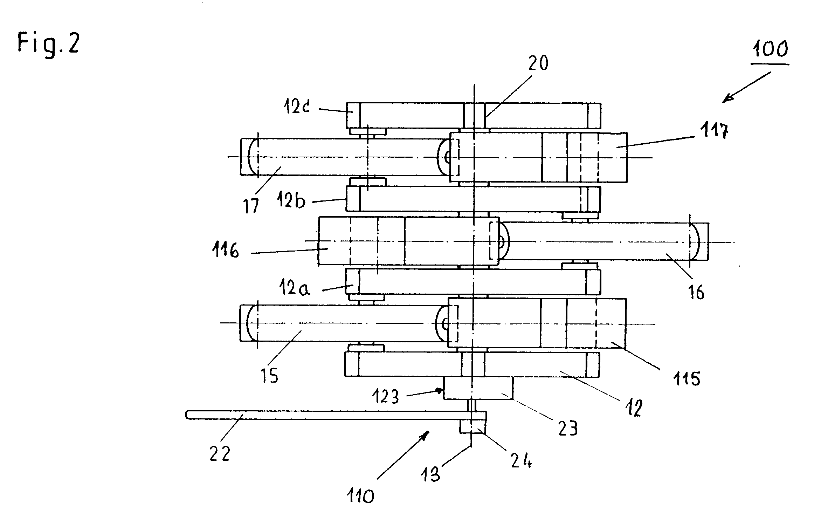

An der Außenwandfläche der Konsole 12 bzw. an der Traghalterung ist über eine Schwenkvorrichtung 123, die z.B. als Schwenkmotor 23 ausgebildet ist, die Kettensäge 110 mit einem Sägeblatt aus dem Schwert 22 mit umlaufend angetriebener Sägekette schwenkbar angelenkt. Die Kettensäge 110 ist mit einem drehzahlsteuerbaren Motor 24 ausgerüstet (Fig. 2). Die Kettensäge 110 ist somit unabhängig von der Verdrehmöglichkeit der Gesamtvorrichtung zu dieser und den Greifarmen 15 bis 17 verschwenkbar.

An der Traghalterung 10 bzw. deren Konsolen 12, 12a, 12b, 12c sind die Hydraulikzylinder 115, 116, 117 befestigt, deren ausfahrbarer Kolben 14 endseitig mit einem Greifarm 15, 16, 17 verbunden ist. Jeder der hier dargestellten Greifarme 15, 16 und 17 ist mit einem solchen Hydraulikzylinder verbunden. Die Traghalterung 10 bzw. deren Konsolen nimmt die Welle 20 auf, an der die Greifarme 15, 16, 17 drehbar angeordnet sind. Die Greifarme 15, 16, 17 sind jeweils sichelförmig ausgeführt und in beliebige Drehwinkelstellungen in Bezug auf die Welle 20 jeweils einzeln verschwenkbar, insbesondere sind jeweils zwei benachbarte Greifarme 15 und 16 aufeinander zu schwenkbar, so daß ein etwa im Öffnungszustand relativ hierzu eingeführtes Werkstück, z.B. ein Ast, durch Aufeinanderzubewegung der beiden Greifarme 15 und 16 kraftschlüssig umfaßt werden kann. Der dritte Greifarm 17 ist ebenfalls schwenkbar, so daß er als zusätzliche Unterstützung an dasselbe Werkstück heranfahrbar ist. Die konkaven Flächen der Greifarme 15, 16 und 17 können mit einem geriffelten Profil zur besseren Halterung glatter Werkstücke versehen sein. Eine zweite Drehstellung der Greifarme 15 und 16 in weiter geöffnetem Zustand ist durch eine strichlinierte Darstellung 15' und 16' eingezeichnet. Die jeweiligen Enden der Kolben 14 sind an der konvexen Außenseite eines jeden Greifarmes 15, 16 und 17 über ein Drehgelenk 21 angelenkt. Ebenfalls an der Traghalterung 10 ist die im Prinzip nach dem Stand der Technik bekannte Kettensäge mit einem Schwert 22 drehbar angelenkt, das in Richtung des Pfeiles X (oder in entgegengesetzter Drehrichtung) drehbar ist. An diesem Schwert 22 wird eine umlaufende Sägekette geführt.

Vorzugsweise, jedoch nicht dargestellt, wird die Traghalterung 10 am Ende eines Teleskoparms befestigt, der Teil eines Baggers, Kranes oder eines beliebigen Flurfahrzeuges sein kann.

Die Vorrichtung mit der motorgetriebenen Kettensäge ist somit als Baumschneider als einhydraulisch betriebenes Vorsatzgerät für die Montage an handelsüblichen, genormten oder nicht genormten Geräteträgern von Teleskoparmen, an Flurförderfahrzeugen, Baggern, Kränen oder ähnlich geeignet erscheinenden Fahrzeugen verwendbar. Die Mechanik des Baumschneiders sind auf einen hydraulischen Antrieb ausgelegt. Der Baumschneider ermöglichst es dem Benutzer, mit Hilfe eines handelsüblichen Teleskopbaggers oder eines Teleskopkranes, an dessen Geräteaufnahme er montiert und mit dessen Hydraulikkreislauf er verbunden wird, leichte bis schwere Fäll- und Beschneidearbeiten an Bäumen rationell, sicher, schnell und mit geringem personellen Aufwand bei höchster Mobilität ausführen zu können. Das erfindungsgemäße Gerät ist für den Einsatz bei Feuerwehr, beim Katastrophenschutz nach wind- und/oder blitzbedingtem Baumschlag mobil und effektiv einsetzbar. Die hohe Funktionalität ergibt sich aus der Beweglichkeit des erfindungsgemäßen Baumschneiders, der mittels des Antriebsfahrzeuges in allen Raumrichtungen positionierbar ist, wobei die Traghalterung aus einer Null-Lage auf- und abschwenkbar sowie mittels der beschriebenen Drehvorrichtung für die Kettensäge um seine eigene Mittelachse insgesamt um 360° drehbar ist. Hierdurch kann jeder beliebige Arbeitspunkt in oder an einem Baum erreicht und bearbeitet werden. Das Gerät ist darüber hinaus auch zur Handhabung schon liegender Stämme ebenso geeignet wie zum Be- und Entladen von Langholz, d.h. gegebenenfalls ohne Betätigung der Säge. Vorzugsweise werden die Greifarme der erfindungsgemäßen Kettensäge mittels Hydraulikzylindern bewegt, die in die Traghalterung bzw. ein Chassis integriert sind. Jeder Greifarm 15 bis 17 hat einen eigenen Hubzylinder, so daß eine große Anpassungsfähigkeit an jede unebene, unrunde, konische oder gekrümmte Baumstammoberfläche gewährleistet ist. Vorzugsweise ist die Sägekette auf einen Hydraulikmotor montiert, der die Sägekette antreibt.

Die Steuerung der Vorrichtung kann von einem Fahrersitz des antreibenden Fahrzeuges oder einer sonstigen mobilen Bedienungseinheit aus erfolgen. Die Handhabung. erfolgt dann mittels einer elektronisch geregelten Einhebelsteuerung für alle Bewegungsachsen des Greifers, der Schneidbetrieb über eine gegebenenfalls eigene, separate Einhebelsteuerung. Wird zum Arbeiten ein Fahrzeug mit Teleskoparm verwendet, so ist dieses vor der Benutzung des erfindungsgemäßen Gerätes auf die genügende Leistungsfähigkeit seines bordeigenen Hydrauliksystems zu überprüfen bzw. im Bedarfsfall auf ein leistungsfähigeres Hydrauliksystem umzurüsten. Die zur Steuerung des erfindungsgemäßen Gerätes notwendige Hard- und Software sowie die Steuereinheiten sind entsprechend zu montieren. Die Hydraulikverbindung kann mittels üblicher Steckkupplungen ausgeführt werden, ebenso können die elektronischen Steuerleitungen mittels eines Sammelsteckers angeschlossen werden. Zur Inbetriebnahme wird das Fahrzeug vor einen zu beschneidenden oder zu fällenden Baum plaziert, wonach die seitlichen fahrzeugeigenen Stützen ausgefahren werden. Der Teleskoparm, an dessen Ende die motorgetriebene Kettensäge montiert ist, wird zu der Position in oder an den Baum gefahren, an der ein Ast beliebiger, dem Greifer angemessener Dicke zu entfernen ist. Der Greifer wird mit der Steuerung des Gerätes in die Position gebracht, in der der Ast bestmöglich ergriffen werden kann. Hierbei steht die Säge- oder sonstige Messerschneideinheit an der Seite, die dem zu verbleibenden Baumteil zugewandt ist. Nach Ergreifen des Astes unter elektronischer Kontrolle und Steuerung des Anpreßdruckes der Greiferarme 15 bis 17 wird die hydraulische Kettensäge, d.h. das Schwert 22 bei laufender Sägekette in Drehung, d.h. in Richtung des Pfeiles 23 versetzt, wo unter entsprechendem Anpreßdruck diese Bewegung weitergeführt wird, bis der Ast abgeschnitten ist. Nach Kappung des Astes verbleibt dieser zunächst in der Greifarm-Halterung, bis diese wieder geöffnet werden. Das Schwert 22 der Kettensäge kann nach Entfernen des Astes wieder zurückgefahren werden oder in der Endstellung verbleiben. Vorzugsweise wird die Greifvorrichtung 15 bis 17 auch zum Transport zu einem Fahrzeug oder zu einer Ablagestelle verwendet.

Mit der Vorrichtung ist auch das Baumfällen möglich, wobei vorzugsweise zunächst stückweise das Astwerk wie beschrieben entfernt wird und der Baumstamm anschließend in einzelne Segmente abgeteilt und auf einem Beladefahrzeug oder einer Ablagestelle angelegt wird.

Die vorbeschriebenen Arbeiten können komplett ohne Zuhilfenahme weiterer Geräte oder Maschinen von einer einzelnen Bedienungsperson ausgeführt werden. Dies erspart nicht nur Arbeitspersonal, sondern auch weitere Arbeiten wie das Halten des abgetrennten Baumstammes oder dessen Sicherung durch Seile oder einen Kran.

Der Einsatz der Vorrichtung macht die beschriebenen Schneidarbeiten erheblich sicherer, die ferner auch schneller und wirtschaftlicher durchgeführt werden können. Auf Arbeitsbühnen oder Kräne oder sonstiges Hilfsmaterial kann vollständig verzichtet werden.

## Patentansprüche

1. Vorrichtung mit einer an einer Traghalterung (10) gehaltenen motorgetriebenen Kettensäge (110) zum Entästen und Fällen von Bäumen und mit einer Greifvorrichtung für zu schneidende Baumäste oder -stämme mit sichelförmigen, mittels Hydraulikzylinder betätigbaren, um Achsen verschwenkbaren Greifarmen,
dadurch gekennzeichnet,
daß
- mindestens drei Greifarme (15, 16, 17) der Greifvorrichtung mit ihren Enden drehbar an einer einzigen Welle (20) befestigt und mit dieser verschwenkbar angetrieben sind,
- die Greifvorrichtung relativ zum Schwert (22) der Kettensäge (110) verschwenkbar ist, die über einen Schwenkmotor (23) mit der Traghalterung (10, 101, 102) verbunden ist, die sowohl als Träger für die Kettensäge (110) als auch als Träger für die Welle (20) für die Greifarme (15, 16, 17) ausgebildet ist, die senkrecht zur Schneidebene steht,
- das Schwert (22) der Kettensäge (110) unabhängig von der Stellung der Traghalterung (10, 101, 102) und der Greifarme (15, 16, 17) um die durch die gemeinsame Welle der Greifarme (15, 16, 17) (20) gegebene Schwenkachse um einen Drehwinkel schwenkbar ist, der zumindest die durch die Greifarmstellung vorgegebene Fläche überstreicht,
- die Kettensäge (110) in Verbindung mit der Verschwenkbarkeit des Schwertes (22) der Kettensäge (110) um bis zu 360° bewegbar ist,
- jeder Greifarm (15, 16, 17) mit einem Hydraulikzylinder (115, 116, 117) verbunden und antreibbar ist, die mit der Traghalterung (10; 101, 102) fest verbunden oder an dieser gelagert sind,
- die Vorrichtung (100) mit den Greifarmen (15, 16, 17), deren Traghalterung (10; 101, 102) und die Kettensäge (110) mittels einer Drehvorrichtung, die die Vorrichtung (100) in vertikaler Ebene um jeweils 180° rechts oder links herum verschwenkt, mit einer Hubvorrichtung verbunden ist, die kran- oder baggerarmverbunden ist.

2. Vorrichtung nach Anspruch 1,
dadurch gekennzeichnet,
daß sowohl das Schwert (22) als auch die Sägekette der Kettensäge (110) hydraulisch oder pneumatisch antreibbar sind.

3. Vorrichtung nach einem der Ansprüche 1 bis 2,
dadurch gekennzeichnet,
daß die Vorrichtung (100) mit der Kettensäge (110) als Vorsatzgerät an einem Teleskoparm, vorzugsweise an Baggern, Flurförderfahrzeugen, Kränen oder Hebebühnen befestigt ist.

4. Vorrichtung nach einem der Ansprüche 1 bis 3,
gekennzeichnet durch
eine Steuereinrichtung, über die sämtliche Schwenkarbeiten und die Sägekette bedienbar sind.

5. Vorrichtung nach einem der Ansprüche 1 bis 4,
dadurch gekennzeichnet,
daß die Steuereinrichtung im oder am Fahrerhaus eines einen Teleskoparm aufweisenden Fahrzeuges angeordnet ist.

## Claims

1. Equipment with a motor-driven chain saw (110) retained on a carrying support (10) for cutting branches from and felling trees and with a seizing means for tree branches or trunks to be cut with sickle-shaped grabbing arms that are operable with the aid of hydraulic cylinder and swivellable about axes,
**characterized in that**
- at least three grabbing arms (15, 16, 17) of the seizing means are, with their ends, rotatably secured to a single shaft (20) and swivellably driven by means of the same;
- the seizing means is swivellable relative to the blade (22) of the chain saw (110) which, by means of a swivel motor (23), is connected with the carrying support (10, 101, 102), which is constructed both as a support or carrier of the chain saw (110) as well as support or carrier of the shaft (20) of the grabbing arms (15, 16, 17), which is located vertically to the cutting plane;
- the blade (22) of the chain saw (110), independently of the position of the carrying support (10, 101, 102) and of the grabbing arms (15, 16, 17) is swivellable about the swivel axis provided by the common shaft (20) of the grabbing arms (15, 16, 17) through an angle of rotation which sweeps across the area predetermined by the position of the grabbing arms;
- the chain saw (110), in conjunction with the swivellability of the blade (22) of the chain saw (110), is movable through up to 360°;
- each grabbing arm (15, 16, 17) is connected to a hydraulic cylinder (115, 116, 117) and drivable, which is rigidly connected with the carrying support (10; 101, 102) or is supported on the same;
- the equipment with the grabbing arms (15, 16, 17), whose carrying support (10; 101, 102) and the chain saw (110), with the aid of a rotating means that swivels the equipment (100) around in a vertical plane through, in each case, 180° to the right or to the left, is connected with a hoisting means which is connection with a crane jib or an excavator arm.

2. Equipment according to Claim 1,
**characterized in that**
both the blade (22) as well as the chain of the chain saw (110) can be hydraulically or pneumatically driven.

3. Equipment according to any of Claims 1 to 2,
**characterized in that**
the equipment (100) with the chain saw (110), in the form of an attachment device, is attached to a telescopic arm, by preference on excavators, materials handling vehicles, cranes or lifting platforms.

4. Equipment according to any of Claims 1 to 3,
**characterized by**
a control unit, with the aid of which all swivelling operations and the chain of the chain saw can be operated.

5. Equipment according to any of Claims 1 to 4,
**characterized in that**
the control unit is mounted in or on the driver's cab of a vehicle provided with a telescopic arm.

## Revendications

1. Dispositif à scie à chaîne (110) commandée par un moteur, maintenue à un support porteur (10) pour l'élagage et l'abattage d'arbres et avec un dispositif de préhension pour les branches et troncs d'arbre à couper avec des bras de préhension en forme de faucille, pouvant être actionnés au moyen de vérins hydrauliques, pivotants autour d'axes,
caractérisé en ce
- qu'au moins trois bras de préhension (15, 16, 17) du dispositif de préhension sont fixés avec leurs extrémités de manière rotative sur un arbre unique (20) et sont entraînés pivotants avec celui-ci,
- le dispositif de préhension est pivotant par rapport à la semelle (22) de la scie à chaîne (110) qui est reliée par un moteur oscillant (23) au support porteur (10, 101, 102) qui est configuré aussi bien comme support pour la scie à chaîne (110) que comme support pour l'arbre (20) pour les bras de préhension (15, 16, 17), qui est perpendiculaire au plan de coupe,
- la semelle (22) de la scie à chaîne (110) est pivotante d'un angle de rotation, indépendamment de la position du support porteur (10, 101, 102) et des bras de préhension (15, 16, 17), autour de l'axe de pivotement donné par l'arbre commun des bras de préhension (15, 16, 17), angle qui balaie au moins la surface prédéfinie par la position des bras de préhension,
- la scie à chaîne (110) est mobile jusqu'à 360° en relation avec la pivotabilité de la semelle (22) de la scie à chaîne (110)
- chaque bras de préhension (15, 16, 17) est relié à et peut être entraîné avec un vérin hydraulique (115, 116, 117), lesquels sont reliés de manière fixe au support porteur (10 ; 101, 102) ou sont positionnés sur celui-ci,
- le dispositif (100) avec les bras de préhension (15, 16, 17), son support porteur (10 ; 101, 102) et la soie à chaîne (110) est relié, au moyen d'un dispositif rotatif qui fait pivoter le dispositif (100) dans le plan vertical autour de respectivement de 180° à droite ou à gauche, à un dispositif de levage qui est relié à un bras de grue ou d'excavateur.

2. Dispositif selon la revendication 1,
caractérisé en ce
qu'aussi bien la semelle (22) que la chaîne de scie de la scie à chaîne (110) peuvent être entraînées de manière hydraulique ou pneumatique.

3. Dispositif selon l'une des revendications 1 à 2,
caractérisé en ce
que le dispositif (100) avec la scie à chaîne (110) est fixé comme appareil additionnel à un bras télescopique, de préférence à des excavateurs, des chariots de manutention, des grues ou des élévateurs.

4. Dispositif selon l'une des revendications 1 à 3,
caractérisé par
un dispositif de commande par lequel toutes les opérations de pivotement et la chaîne de soie peuvent être commandées.

5. Dispositif selon l'une des revendications 1 à 4,
caractérisé en ce
que le dispositif de commande est placé dans ou sur la cabine du conducteur d'un véhicule présentant un bras télescopique.
